# EUROPEAN PATENT APPLICATION

(11) **EP 2 574 834 A1**
(43) Date of publication of application: **03.04.2013**
(21) Application number: 11191602.9
(22) Date of filing: 01.12.2011
(51) Int. Cl.: F16L 19/06, F16L 37/138, F16L 13/14

(54) **Pipe connector**

(30) Priority: 23.08.2011 CN 201110243315
(71) Applicant: King Industrial Limited, Wanchai Hong Kong (CN)
(72) Inventor: Salehi-Bakhtiari, Manouchehr, Wanchai Hong Kong (CN)
(74) Representative: Axelsson, Nils Ake A.L.

(57) **Abstract**

A pipe connector including a connector body (1) having a passage (2); a plurality of flexible pieces (3); a locking cap (4); a first stopping member (7); and a second stopping member (6). The plurality of flexible pieces (3) is circumferentially disposed at one end of the passage (2). One end of each of the flexible pieces (3) is fixedly connected to the connector body (1). The locking cap (4) includes a first end close to the connector body (1) and a second end opposite to the first end. A conical surface (5) is formed on the internal wall of the second end. The conical surface coordinates with the external wall of the flexible pieces (3) to lock the pipe. The first stopping member (7) is disposed on the external wall of the connector body (1) or the flexible pieces (3); and the second stopping member (6) is disposed on the internal wall of the first end of the locking cap (4) and coordinates with the first stopping member (7).

## Description

### BACKGROUND OF THE INVENTION

Field of the Invention

The invention relates to a connecting device, and more particularly to a pipe connector.

Description of the Related Art

To make a high quality of connection between two or more pipes, the firmness and sealing quality of the connection between a pipe and a pipe connector should be ensured. The firmness and the quality of sealing are determined by the connection mode between a pipe and a pipe connector. If components used for connection do not fit each other, or some incorrect components are involved, the connection may become loosen or even cause separation of a pipe from a pipe connector once the pipe gets pressurized (for example, the pipe is injected with water).

In the prior art, to improve the firmness and the sealing quality between a pipe and a pipe connector, a transforming pipe connector for gas tube has been introduced. The transforming pipe connector for gas tube includes a connector body and a locking cap. One end of the connector body connects with a metallic pipe, and the other end thereof is connected to the internal wall of a plastic pipe. The locking cap is mounted on the external wall of the plastic pipe, and a screw thread is disposed on the internal wall of the locking cap for forming a threaded connection with the external wall of the connector body. A conical surface is disposed on the internal wall of the other end of the locking cap. A plurality of teeth is circularly disposed on the external wall of the end of the connector body for connecting with a plastic pipe. Furthermore, a compression ring is disposed between the external wall of the plastic pipe and the locking cap for forming a compression on the external wall of the plastic pipe. The compression ring is preferably a C-shaped ring. When the locking cap is screwed in the direction of pipe insertion, the conical surface may provide a gradually increasing compression on the C-shaped ring with the reducing of the internal diameter of the contacting position, thereby compressing the C-shaped ring on the external wall of the plastic pipe.

As the component for compressing the external wall of the pipe is a C-shaped ring, and the C-shaped ring is designed separately with the connector body, it may cause incorrect assembly when some components with similar size are manufactured but do not actually fit each other. The incorrect assembly is not easily found during the process of assembling. Thus, the pipe may be loosen in the pipe connector and thus cause a serious sealing problem, or get separated from the pipe connector to cause connection failure when the pipe is injected with water and get pressurized. Furthermore, additional components used for assembly may make the assembling complicated and increases the use of raw material and the cost of production.

### SUMMARY OF THE INVENTION

In view of the above-described problems, it is one objective of the invention to provide a pipe connector that can effectively avoid the incorrect assembly, and have a firm connection.

To achieve the above objective, in accordance with one embodiment of the invention, there is provided a pipe connector comprising:

a connector body comprising a passage;

a plurality of flexible pieces;

a locking cap;

a first stopping member; and

a second stopping member;

wherein

the plurality of flexible pieces is circumferentially disposed at one end of the passage of the connector body for locking a pipe inserted into the passage , and one end of each of the flexible pieces is fixedly connected to the connector body;

the locking cap comprises a first end close to the connector body and a second end opposite to the first end;

a conical surface is formed on the internal wall of the second end, the internal diameter of the conical surface increases in the direction of pipe insertion, and the conical surface coordinates with the external wall of the flexible pieces to lock the pipe;

the first stopping member is disposed on the external wall of the connector body or the flexible pieces; and

the second stopping member is disposed on the internal wall of the first end of the locking cap and coordinates with the first stopping member to prevent the separation of the locking cap from the connector body or the flexible pieces.

In a class of this embodiment, the pipe connector further comprises an O-shaped sealing ring disposed in the passage of the connector body for forming a sealed connection with the external wall of the pipe and with the internal wall of the passage, respectively.

In a class of this embodiment, the pipe connector further comprises a positioning member for preventing the exit of the O-shaped sealing ring from the connector body.

In a class of this embodiment, the flexible pieces are tapers integrally cast with the connector body; the radial thickness of the tapers increases in the direction of pipe insertion; and a plurality of teeth are disposed on the internal wall of the taper for contacting with the pipe.

In a class of this embodiment, the first stopping member is a convex member circumferentially disposed on the external wall of the connector body or the flexible pieces, the second stopping member is a first bulge circumferentially disposed on the internal wall of the locking cap, and the first convex member coordinates with the first bulge to prevent the separation of the locking cap from the connector body.

In a class of this embodiment, the first stopping member is a first screw thread circumferentially disposed on the external wall of the connector body or the flexible pieces, the second stopping member is a second screw thread circumferentially disposed on the conical surface of the locking cap, and the first screw thread coordinates with the second screw thread.

In a class of this embodiment, the tapers have a flat circumferential external wall.

In a class of this embodiment, the tapers comprises a flexible connection segment and a griping segment; the flexible connection segment is located at one end of each of the tapers for connecting with the connector body; the gripping segment is located at the other end of each of the tapers and opposite to the flexible connection segment, with a thickness thereof exceeding that of the flexible connection segment; and the convex member is disposed at the joint between the flexible connection segment and the griping segment.

In a class of this embodiment, the pipe connector further comprises a pipe fixing member disposed on the internal wall of one end of the locking capfor preliminarily fixing the pipe inserted into the locking cap.

In a class of this embodiment, the fixing member is a second bulge disposed on the internal wall of the locking cap.

In a class of this embodiment, both the first bulge and the second bulge are a circular structure, the internal diameter of the circular structure formed by the second bulge is smaller than or equal to the external diameter of the pipe, and the internal diameter formed by the second bulge is smaller than the internal diameter of any segment of the conical surface of the locking cap.

In a class of this embodiment, the internal diameter of the passage formed by the tapers at a releasing state is larger than the external diameter of the pipe, and the internal diameter of the passage formed by the tapers at a compression state is smaller than or equal to the external diameter of the pipe.

In a class of this embodiment, the tapers comprises a flexible connection segment and a griping segment; the flexible connection is located at one end of each of the tapers for connecting the tapers with the connector body; the griping segment is located at the other end of each of the tapers, with a thickness thereof exceeding that of the flexible connection segment; and the first screw thread is disposed on the gripping segment.

In a class of this embodiment, the pipe connector further comprises a pipe fixing member disposed on the second end of the locking cap for preliminarily fixing the pipe inserted into the locking cap.

In a class of this embodiment, the pipe fixing member is a third bulge disposed on the internal wall of the locking cap.

In a class of this embodiment, the third bulge is a circular structure, the internal diameter of the circular structure formed by the third bulge is smaller than or equal to the external diameter of the pipe, and the internal diameter formed by the third bulge is smaller than the internal diameter of any segment of the conical surface of the locking cap.

In a class of this embodiment, the internal diameter of the passage formed by the tapers at a releasing state is larger than the external diameter of the pipe, and the internal diameter of the passage formed by the tapers at a compression state is smaller than or equal to the external diameter of the pipe.

Advantages of the invention are summarized below:

1. The flexible pieces are fixedly connected with the connector body, which reduces the number of components used in the pipe connector and avoids the incorrect assembly of components due to too many components involved, and facilitate the assembly work. In addition, the conical surface coordinates with the external wall of the flexible pieces to compress the flexible pieces to strongly grip on the external wall of the pipe, so as to lock the pipe surrounded by the flexible pieces.

2. The O-shaped sealing ring disposed in the passage of the connector body for respectively forming a sealed connection with the external wall of the pipe and with the internal wall of the passage improves the sealing of the pipe connector system and guarantees the quality of connection between the pipe connector and the pipe.

3.The positioning member for preventing the exit of the O-shaped sealing ring from the connector body stabilizes the O-shaped sealing ring in the connector body and guarantees the sealing between the pipe and the connector body.

4. The design that the flexible pieces are tapers integrally cast with the connector body avoids incorrect assembly due to too many components involved, and facilitates the assembly work; in addition, the integral casting of the flexible pieces with the connector body reduces the number of components used, and reduce the use of raw material, thereby reducing the cost of production. That the radial thickness of the tapers increases in the direction of pipe insertion and a plurality of teeth are disposed on the internal wall of the taper for contacting with the pipe improves the griping force of the flexible pieces acting on the external wall of the pipe when the teeth contact with the external wall of the pipe.

5. The first stopping member is a convex member circumferentially disposed on the external wall of the connector body or the flexible pieces, the second stopping member is a first bulge circumferentially disposed on the internal wall of the locking cap, and the convex member coordinates with the first bulge to prevent the separation of the locking cap from the connector body. The shaping of the convex member and the bulge is easy, and no additional component is needed, thereby simplifying production process.

6. The first stopping member is a first screw thread circumferentially disposed on the external wall of the connector body or the flexible pieces, the second stopping member is a second screw thread circumferentially disposed on the conical surface of the locking cap, and the first screw thread coordinates with the second screw thread. The position of the locking cap corresponding to that of the connector body can be regulated through the screw thread, so as to regulate the gripping force of the flexible pieces acting on the external wall of the pipe, thereby allowing the insertion of the pipes with different external diameters.

7. The flat circumferential external wall of the tapers allows a small friction between the locking cap and the flexible pieces and facilitates the movement of the locking cap when the locking cap moves in the direction of connector body after it is mounted on the flexible pieces, thereby improving the usability of the pipe connector.

8. The tapers comprises a flexible connection segment and a griping segment, which realizes the deflection of the tapes at the flexible segment, and allows the entire griping segment to grip on the external wall of the pipe, thereby improving the gripping force of the tapers acting on the pipe.

9. A pipe fixing member for preliminarily fixing the pipe inserted into the locking cap can stabilize the pipe inserted into the locking cap.

10. The fixing member is a second bulge disposed on the internal wall of the locking cap, the second bulge are a circular structure, and the internal diameter of the circular structure formed by the second bulge is smaller than or equal to the external diameter of the pipe. Thus, the fixing member may be adapted to firmly locking a soft pipe inserted into the locking cap.

11. The flexible connection segment is located at one end of each of the tapers for connecting with the connector body and the griping segment is located at the other end of each of the tapers. The first screw thread is disposed on the gripping segment, which causes the radial deflection of the flexible segment when the locking cap is screwed in via the first screw thread towards the connector body, thereby allowing the gripping segment of the flexible piece to grip on the external wall of the pipe.

### BRIEF DESCRIPTION OF THE DRAWINGS

Detailed description will be given below in conjunction with accompanying drawings:

FIG **1** is a sectional view of a pipe connector according to one embodiment of the invention;

FIG **2** is a sectional view of a pipe connector illustrated in FIG **1** connected with a pipe according to one embodiment of the invention;

FIG **3** is a schematic diagram of a combined pipe connecting device comprising two pipe connectors according to one embodiment of the invention;

FIG **4** is a sectional view of another pipe connector according to one embodiment of the invention;

FIG **5** is a sectional view of a pipe connector illustrated in FIG **4** connected with a pipe according to one embodiment of the invention; and

FIG **6** is a schematic diagram of a combined pipe connecting device comprising two pipe connectors illustrated in FIG **4** according to one embodiment of the invention.

In the drawings, the following reference numbers are used: **1 -** Pipe connector; **2 -** passage; **3 -** flexible piece, **4 -** locking cap; **5 -** conical surface; **6 -** second stopping member; **7 -** first stopping member; **8 -** positioning member; **9 -** flexible connection segment; **10 -** teeth; **11 -** O-shaped sealing ring; **12 -** second bulge; **13 -** pipe; **14 -** pipe stopping member; **15 -** gripping segment; E-direction of pipe insertion.

### DETAILED DECRIPTION OF THE EMBODIMENTS

### Example 1

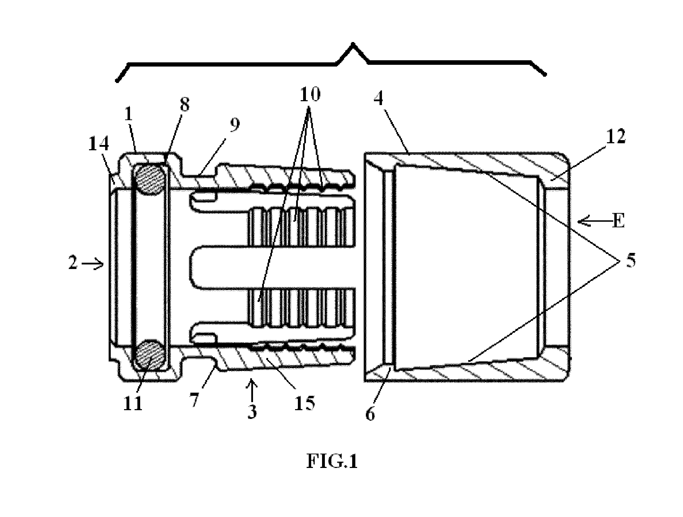

As shown in FIG **1****,** a pipe connector comprises a connector body **1** having a passage **2** and a plurality of flexible pieces **3** circumferentially disposed at the end of the passage **2** of the connector body **1** for locking a pipe inserted into the passage **2.** One end of each flexible piece **3** is fixedly connected to the connector body **1.** In this embodiment, the flexible pieces **3** are tapers **5** integrally cast with the connector body **1.** The tapers **5** have a flat circumferential external wall. The radial thickness of the tapers increases in the direction of pipe insertion. A plurality of teeth **10** for contacting with the pipe is preferably disposed on the internal wall of each of the tapers. The tapers preferably comprises a flexible connection segment **9** located at one end of each of the tapers for connecting with the connector body **1** and a gripping segment **15** located at the other end of each of the tapers. The thickness of the gripping segment 15 exceeds that of the flexible connection segment **9.**

The pipe connector further comprises a locking cap **4.** The locking cap **4** has a first end close to the connector body and a second end opposite to the first end. A conical surface **5** is formed on the internal wall of the second end. The internal diameter of the conical surface **5** increases in the direction of pipe insertion **E,** and the conical surface **5** coordinates with the external wall of the flexible pieces **3** to lock the pipe.

The pipe connector further comprises a first stopping member **7.** The first stopping member **7** is disposed on the external wall of the connector body **1** or the flexible pieces **3.** In this embodiment, preferably, the first stopping member **7** is a first convex member circumferentially disposed on the external wall of the flexible pieces **3,** and located at the connection point of the flexible connection segment and the gripping segment.

The pipe connector further comprises a second stopping member **6.** The second stopping member **6** is disposed on the internal wall of the first end of the locking cap **4**for coordinating with the first stopping member **7** to prevent the separation of the locking cap **4** from the connector body **1.** In this embodiment, preferably, the second stopping member **6** is a first bulge circumferentially disposed on the internal wall of the locking cap **4,** and the first convex member coordinates with the first bulge to prevent the separation of the locking cap **4** from the connector body **1.** Preferably, the first bulge is a circular structure.

The pipe connector further comprises a pipe fixing member **12.** The pipe fixing member **12** is a second bulge disposed on the internal wall of one end of the locking cap, which is opposite to the first bulge for preliminarily fixing the pipe inserted into the locking cap **4.** In this embodiment, the second bulge is preferably a circular structure. The internal diameter of the entrance formed by the second bulge is smaller than the internal diameter of any segment of the conical surface **5** of the locking cap 4, and the internal diameter of the circular structure formed by the second bulge is smaller than or equal to the external diameter of the pipe.

The pipe connector further comprises a positioning member **8.** The positioning member **8** is disposed in the passage **2** of the connector body **1.** In this embodiment, preferably, the position member **8** is a notch disposed on the internal wall of the connector body **1;** and an O-Shaped sealing ring **11** is located in the notch for respectively forming a sealed connection with the external wall of the pipe, and a seal connection with the internal wall of the passage **2.** The notch is designed for preventing the exit of the O-shaped sealing ring **11** from the connector body **1.**

The pipe connector further comprises a pipe stopping member **14.** The pipe stopping member **14** is disposed on the internal wall of the connector body **1** for preventing the pipe from being further inserted. Preferably, the pipe stopping member **14** is a second convex member disposed on the internal wall of the connector body **1.** Preferably, the positioning member **8** is disposed between the pipe stopping member **14** and the flexible pieces **3.**

Preferably, the internal diameter of the passage formed by the tapers at a releasing state is larger than the external diameter of the pipe, and the internal diameter of the passage formed by the tapers at a compression state is smaller than or equal to the external diameter of the pipe.

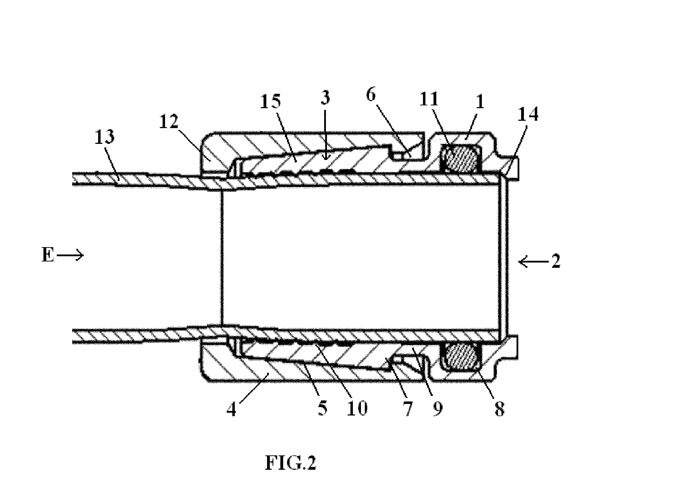

As shown in FIG **2****,** the insertion of a pipe into the pipe connector is described as below. First, a pipe **13** is inserted into the passage formed by the pipe fixing member **12** of the locking cap **4.** The pipe fixing member **12** preliminarily fixes the pipe inserted therein. Then, the pipe **13** is inserted into the passage formed by the flexible pieces **3** through the locking cap **4.** Thus, the flexible pieces **3** are located between the external wall of the pipe **13** and the internal wall of the locking cap **4.** Thereafter, with the locking cap **4** moving forward in the direction of pipe insertion **E,** the conical surface **5** of the locking cap **4** presses on the flexible pieces, and causes the flexible pieces to grip on the external wall of the pipe **13.** After the pipe **13** passes through the O-Shaped sealing ring **11,** the O-Shaped sealing ring **11** and the external wall of the pipe **13** contact with each other, and a sealed connection is then formed therebetween. With the further insertion of the pipe **13** along the passage **2** of the connector body **1,** the end of the pipe **13** contacts with the pipe stopping member **14** which stops the further insertion of the pipe **13.** After that, the second stopping member **6** of the locking cap **4** moves to the position of the first stopping member **7** and coordinates therewith to prevent the exit of the locking cap **4** in the reverse direction of pipe insertion **E.** Finally, the flexible pieces **3** strongly grip on the external wall the pipe **13** to prevent the exit of the pipe **13** from the connector body **1.**

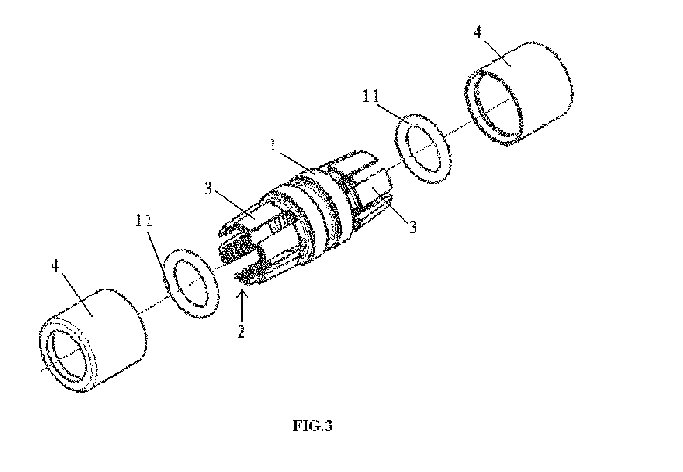

As shown in FIG **3****,** it is a combined pipe connecting device comprising two pipe connectors that are disposed oppositely and connected to each other, for connecting two pipes together.

The pipe connector described in this embodiment is adapted to a metallic pipe or a soft pipe.

### Example 2

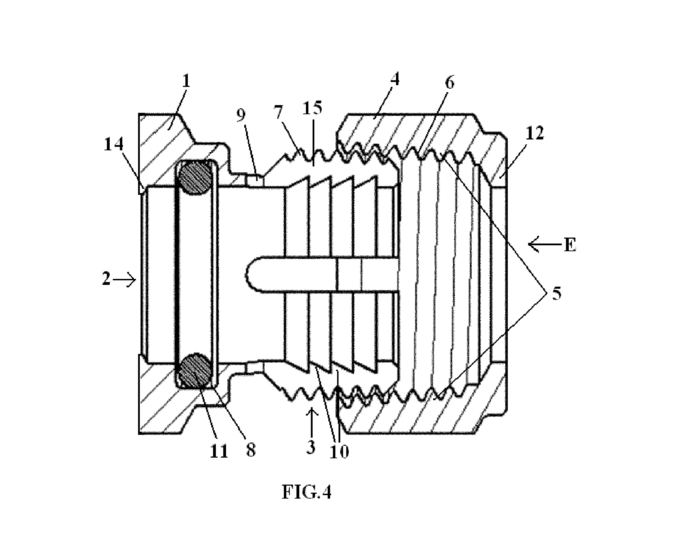

As shown in FIG **4****,** a pipe connector comprises a connector body **1** having a passage **2** and a plurality of flexible pieces **3** for locking the pipe inserted into the passage **2.** The flexible pieces **3** are circumferentially disposed at the end of the passage **2** of the connector body **1,** and one end of each flexible pieces **3** is fixedly connected to the connector body **1.** In this embodiment, the flexible pieces **3** preferably are tapers integrally cast with the connector body **1.** The radial thickness of the tapers increases in the direction of pipe insertion **E** and the tapers have a flat circumferential external wall. A plurality of teeth **10** for contacting with the pipe is preferably disposed on the internal wall of each of the tapers. The tapers preferably comprises a flexible connection segment **9** located at one end of each of the tapers for connecting with the connector body **1** and a gripping segment **15** located at the other end of each of the tapers. The gripping segment **15** is opposite to the flexible connection segment **9** and the thickness thereof exceeds that of the flexible connection segment **9.**

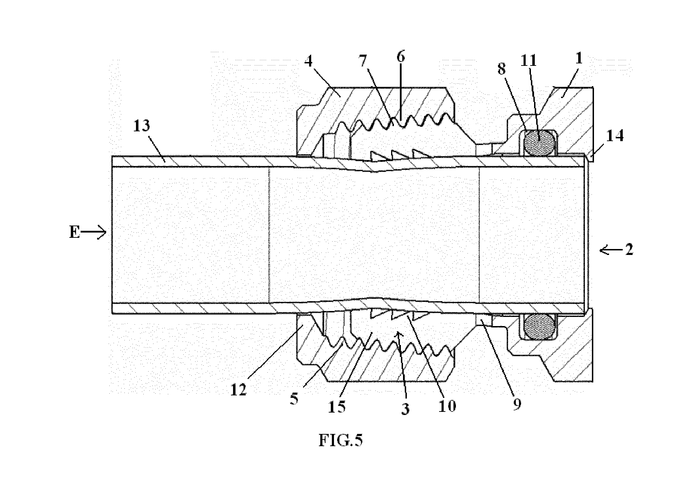

The pipe connector further comprises a locking cap **4.** The locking cap **4** has a first end close to the connector body and a second end opposite to the first end. A conical surface **5** is formed on the internal wall of the second end. As shown in FIG **5****,** the internal diameter of the conical surface **5** increases in the direction of pipe insertion **E,** and the conical surface **5** coordinates with the external wall of the flexible pieces **3** to lock the pipe **13.** Preferably, the locking cap **4** is a sleeve.

The pipe connector further comprises a first stopping member **7.** The first stopping member **7** is disposed on the external wall of the connector body **1** or the flexible pieces **3.** In this embodiment, preferably, the first stopping member is a first screw thread circumferentially disposed on the external wall of the flexible pieces **3.**

The pipe connector further comprises a second stopping member **6.** The second stopping member **6** is disposed on the internal wall of the first end of the locking cap **4** for coordinating with the first stopping member **7** to prevent the separation of the locking cap **4** from the connector body **1** or the flexible pieces **3.** In this embodiment, preferably, the second stopping member **6** is a second screw thread circumferentially disposed on the conical surface of the locking cap **4,** and coordinates with the first screw thread.

The pipe connector further comprises a pipe fixing member **12.** The pipe fixing member **12** is disposed on the internal wall of one end of the locking cap **4,** which is opposite to the end of the locking cap **4** connected with the first screw thread for preliminarily fixing the pipe inserted into the locking cap **4.** In this embodiment, preferably, the pipe fixing member **12** is a third bulge disposed on the internal wall of the locking cap **4.** The third bulge is a circular structure. The internal diameter of the circular structure formed by the third bulge is smaller than or equal to the external diameter of the pipe, and the internal diameter of the circular structure formed by the third bulge is smaller than the internal diameter of any segment of the conical surface **5** of the locking cap **4.**

The pipe connector further comprises a positioning member **8.** The positioning member **8** is disposed in the passage **2** of the connector body **1.** In this embodiment, preferably, the position member **8** is a notch disposed on the internal wall of the connector body **1;** and an O-Shaped sealing ring **11** is located in the notch for respectively forming a sealed connection with the external wall of the pipe, and a seal connection with the internal wall of the passage **2.** The notch is designed for preventing the exit of the O-shaped sealing ring **11** from the connector body **1.**

The pipe connector further comprises a pipe stopping member **14.** The pipe stopping member **14** is disposed on the internal wall of the connector body **1** for preventing the pipe from being further inserted. Preferably, the pipe stopping member **14** is a second convex member disposed on the internal wall of the connector body **1.** Preferably, the positioning member **8** is disposed between the pipe stopping member **14** and the flexible pieces **3.**

The internal diameter of the passage formed by the tapers at a releasing state is larger than the external diameter of the pipe, and the internal diameter of the passage formed by the tapers at a compression state is smaller than or equal to the external diameter of the pipe.

As shown in FIG **5****,** the insertion of a pipe into the pipe connector is described as below. First, a pipe **13** is inserted into the passage formed by the pipe fixing member **12** of the locking cap **4.** The pipe fixing member **12** preliminarily fixes the pipe inserted therein. Then, the pipe **13** is inserted into the passage formed by the flexible pieces **3** through the locking cap **4.** Thus, the flexible pieces **3** are located between the external wall of the pipe **13** and the internal wall of the locking cap **4.** Thereafter, with the locking cap **4** moving forward in the direction of pipe insertion **E** through the coordination between the first screw thread and the second screw thread, the conical surface **5** of the locking cap **4** presses on the flexible pieces, and causes the flexible pieces to grip on the external wall of the pipe **13.** After the pipe **13** passes through the O-Shaped sealing ring **11,** the O-Shaped sealing ring **11** and the external wall of the pipe **13** contact with each other, and a sealed connection is then formed therebetween. With the further insertion of the pipe **13** along the passage **2** of the connector body 1, the first screw thread and the second screw thread coordinate with each other, so as not only to prevent the exit of the locking cap **4** in the reverse direction of pipe insertion **E** but also to cause the flexible pieces strongly grip on the external wall the pipe **13** to prevent the exit of the pipe **13** from the pipe connector.

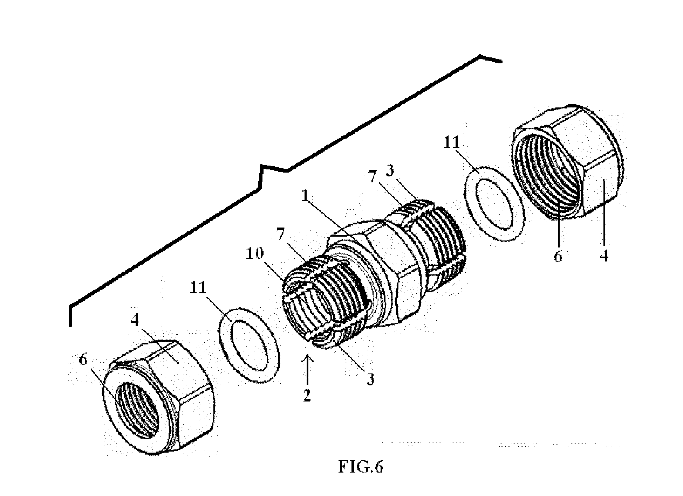

As shown in FIG **6****,** it is a combined pipe connecting device comprising two pipe connectors that are disposed oppositely and connected to each other, for connecting two pipes together.

The pipe connector described in this embodiment is adapted to a metallic pipe or a soft pipe.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A pipe connector, comprising:
a) a connector body (1) comprising a passage (2);
b) a plurality of flexible pieces (3);
c) a locking cap (4);
d) a first stopping member (7); and
e) a second stopping member (6);
wherein
the plurality of flexible pieces (3) is circumferentially disposed at one end of said passage (2) of said connector body (1) for locking a pipe inserted into said passage (2), and one end of each of said flexible pieces (3) is fixedly connected to said connector body (1);
said locking cap (4) comprises a first end close to said connector body (4) and a second end opposite to said first end;
a conical surface (5) is formed on the internal wall of said second end, the internal diameter of said conical surface (5) increases in the direction of pipe insertion, and said conical surface (5) coordinates with the external wall of said flexible pieces (5) to lock said pipe;
said first stopping member (7) is disposed on the external wall of said connector body (1) or said flexible pieces (3); and
said second stopping member (6) is disposed on the internal wall of said first end of said locking cap (4) and coordinates with said first stopping member (7) to prevent the separation of said locking cap (4) from said connector body (1) or said flexible pieces (3).

2. The pipe connector of claim 1, further comprising an O-shaped sealing ring (11) disposed in said passage (2) of said connector body (1) for forming a sealed connection with the external wall of said pipe and with the internal wall of said passage (2), respectively.

3. The pipe connector of claim 2, further comprising a positioning member (8) for preventing the exit of said O-shaped sealing ring (11) from said connector body (1).

4. The pipe connector of claim 3, wherein
said flexible pieces (3) are tapers integrally cast with said connector body (1);
the radial thickness of said tapers increases in the direction of pipe insertion; and
a plurality of teeth (10) are disposed on the internal wall of said taper for contacting with said pipe (13).

5. The pipe connector of claim 1, wherein
said first stopping member (7) is a convex member circumferentially disposed on the external wall of said connector body (1) or said flexible pieces (3);
said second stopping member (6) is a first bulge circumferentially disposed on the internal wall of said locking cap (4); and
said convex member coordinates with said first bulge to prevent the separation of said locking cap (4) from said connector body (1).

6. The pipe connector of claim 4, wherein
said first stopping member (7) is a convex member circumferentially disposed on the external wall of said connector body (1) or said flexible pieces (3);
said second stopping member (6) is a first bulge circumferentially disposed on the internal wall of said locking cap (4); and
said convex member coordinates with said first bulge to prevent the separation of said locking cap (4) from said connector body (1).

7. The pipe connector of claim 1, wherein
said first stopping member (7) is a first screw thread circumferentially disposed on the external wall of said connector body or said flexible pieces (3);
said second stopping member (6) is a second screw thread circumferentially disposed on said conical surface (5) of said locking cap (4); and
said first screw thread coordinates with said second screw thread.

8. The pipe connector of claim 4, wherein
said first stopping member (7) is a first screw thread circumferentially disposed on the external wall of said connector body or said flexible pieces (3);
said second stopping member (6) is a second screw thread circumferentially disposed on said conical surface (5) of said locking cap (4); and
said first screw thread coordinates with said second screw thread.

9. The pipe connector of claim 6, wherein said tapers have a flat circumferential external wall.

10. The pipe connector of claim 9, wherein
said tapers comprises a flexible connection segment (9) and a griping segment (15);
said flexible connection segment (9) is located at one end of each of said tapers for connecting with said connector body (1);
said griping segment (15) is located at the other end of each of said tapers, and opposite to said flexible connection segment (9), with a thickness thereof exceeding that of said flexible connection segment (9); and
said convex member is formed at the joint between said flexible connection segment (9) and said griping segment (15).

11. The pipe connector of claim 10, further comprising a pipe fixing member (12) disposed on the internal wall of said second end of said locking cap (4) for preliminarily fixing said pipe inserted into said locking cap (4).

12. The pipe connector of claim 11, wherein said fixing member (12) is a second bulge disposed on the internal wall of said locking cap (4); both said first bulge and said second bulge are a circular structure, the internal diameter of said circular structure formed by said second bulge is smaller than or equal to the external diameter of said pipe, and the internal diameter formed by said second bulge is smaller than the internal diameter of any segment of said conical surface (5) of said locking cap (4); the internal diameter of said passage formed by said tapers at a releasing state is larger than the external diameter of said pipe, and the internal diameter of said passage formed by said tapers at a compression state is smaller than or equal to the external diameter of said pipe.

13. The pipe connector of claim 8, wherein
said tapers comprise a flexible connection segment (9) and a griping segment (15);
said flexible connection segment (9) is located at one end of each of said tapers for connecting with said connector body (1);
said griping segment (15) is located at the other end of each of said tapers and opposite to said flexible connection segment (9), with a thickness thereof exceeding that of said flexible connection segment (9); and
said first screw thread is disposed on said gripping segment (15).

14. The pipe connector of claim 15, further comprising a pipe fixing member (12) disposed on the internal wall of said second end of said locking cap (4) for preliminarily fixing said pipe (13) inserted into said locking cap (4); said pipe fixing member (12) is a third bulge disposed on the internal wall of said locking cap (4), said third bulge is a circular structure, the internal diameter of the circular structure formed by said third bulge is smaller than or equal to the external diameter of said pipe, and the internal diameter formed by said third bulge is smaller than the internal diameter of any segment of said conical surface (5) of said locking cap (4), the internal diameter of said passage formed by said tapers at a releasing state is larger than the external diameter of said pipe, and the internal diameter of said passage formed by said tapers at a compression state is smaller than or equal to the external diameter of said pipe.

15. The pipe connector of claim 4, wherein
said tapers comprises a flexible connection segment (9) and a griping segment (15);
said flexible connection segment (9) is located at one end of each of said tapers for connecting with said connector body (1);
said griping segment (15) is located at the other end of each of said tapers, and opposite to said flexible connection segment (9), with a thickness thereof exceeding that of said flexible connection segment (9); and
said convex member is formed at the joint between said flexible connection segment (9) and said griping segment (15).
